# EUROPEAN PATENT APPLICATION

(11) **EP 4 531 122 A1**
(43) Date of publication of application: **02.04.2025**
(21) Application number: 23881915.5
(22) Date of filing: 26.10.2023
(51) Int. Cl.: H01M 4/02, H01M 4/62, H01M 4/66, H01M 50/586

(54) **ELECTRODE ASSEMBLY AND BATTERY**

(30) Priority: 26.10.2022 CN 202211322326
(71) Applicant: Zhuhai CosMX Battery Co., Ltd., Zhuhai, Guangdong 519180 (CN)
(72) Inventor: ZHANG, Jian, Zhuhai, Guangdong 519180 (CN); PENG, Chong, Zhuhai, Guangdong 519180 (CN); LI, Junyi, Zhuhai, Guangdong 519180 (CN); CHEN, Yao, Zhuhai, Guangdong 519180 (CN)
(74) Representative: Murgitroyd & Company
(86) International application number: PCT/CN2023/126777
(87) International publication number: WO 2024/088339

(57) **Abstract**

Disclosed are an electrode assembly and a battery. The present invention provides an electrode assembly, including a positive electrode plate formed through winding, where the positive electrode plate includes a positive electrode current collector, a first protective layer, and a positive electrode active material layer. The positive electrode current collector includes a first surface and a second surface. The second surface includes a first region and a second region. The first surface and the first region are provided with the first protective layer and the positive electrode active material layer, and the first protective layer is located between the positive electrode active material layer and the positive electrode current collector. The second region is provided with the first protective layer. The first protective layer includes a conductive material and a conductive layer and a binder. The present invention provides an electrode assembly to take into account safety and cycling performance of the battery.

## Description

### TECHNICAL FIELD

The present invention relates to an electrode assembly and a battery, and pertains to the field of battery technologies.

### BACKGROUND

A battery includes an electrode assembly that can carry out electrochemical reactions and a housing that seals the electrode assembly. In a case that the battery is mechanically abused, for example, in case of nail penetration or extrusion, a serious short circuit may occur inside the electrode assembly, resulting in a battery failure and thermal runaway, which causes potential safety hazards to use of the battery.

Most common short-circuit situations include: a short circuit between a positive electrode current collector and a negative electrode current collector, a short circuit between the positive electrode current collector and a negative electrode active material layer, a short circuit between a positive electrode active material layer and the negative electrode current collector, and a short circuit between the positive electrode active material layer and the negative electrode active material layer. When there is a short circuit between the positive electrode current collector and the negative electrode active material layer, heat production is the fastest, and thermal runaway is most likely to occur, resulting in a great safety hazard.

### SUMMARY

The present invention provides an electrode assembly for solving the problem that a positive electrode current collector and a negative electrode active material layer are prone to a short circuit when a battery is mechanically abused, so as to improve safety of the battery.

A first aspect of the present invention provides an electrode assembly, where the electrode assembly includes a positive electrode plate formed through winding, and the positive electrode plate includes a positive electrode current collector, a first protective layer, and a positive electrode active material layer.

The positive electrode current collector includes a first surface close to a winding center and a second surface away from the winding center. The second surface includes a first region and a second region. The first surface and the first region are provided with the first protective layer and the positive electrode active material layer, and the first protective layer is located between the positive electrode active material layer and the positive electrode current collector. The second region is provided with the first protective layer.

The first protective layer includes a conductive material and a binder.

In a specific implementation, the positive electrode plate further includes a second protective layer, the first protective layer and the second protective layer are sequentially laminated on the second region, and the second protective layer includes an inorganic material and a binder.

In a specific implementation, a thickness of the first protective layer provided in the first region is less than or equal to a thickness of the first protective layer provided in the second region.

In a specific implementation, a difference between the thickness of the first protective layer provided in the first region and the thickness of the first protective layer provided in the second region ranges from 0 µm to 10 µm.

In a specific implementation, the conductive material includes a first conductive material and/or a second conductive material. The first conductive material includes one or more of SnO₂, In₂O₃, Sb-doped SnO₂, F-doped SnO₂, Sn-doped In₂O₃, or Al-doped ZnO. The second conductive material includes a matrix particle and a coating layer coated on a surface of the matrix particle, where the matrix particle is one or more of aluminum oxide, magnesium oxide, titanium oxide, zinc oxide, silicon oxide, boehmite, cobalt oxide, iron phosphate, lithium iron phosphate, lithium nickel cobalt manganese oxide, or lithium iron manganese phosphate, and the coating layer includes one or more of carbon, SnO₂, In₂O₃, Sb-doped SnO₂, F-doped SnO₂, Sn-doped In₂O₃, or Al-doped ZnO.

In a specific implementation, Dv50 of the conductive material ranges from 0.05 µm to 5 µm.

In a specific implementation, a resistivity of the conductive material ranges from 0.01 Ω•m to 1 Ω•m.

In a specific implementation, a mass of the conductive material accounts for 40% to 98% of a total mass of the first protective layer.

In a specific implementation, a resistivity of the inorganic material is greater than 10⁴ Ω•cm.

A second aspect of the present invention provides a battery, including any one of the foregoing electrode assemblies.

Implementation of the present invention brings about at least the following advantages:

1. The present invention provides an electrode assembly. The first protective layer is arranged on a surface of a positive electrode current collector and covers at least a part that is of the positive electrode current collector and that is located in the outermost ring of the electrode assembly, thereby reducing an uncoated foil region on the surface of the positive electrode current collector, reducing a risk of a short circuit between the positive electrode current collector and the negative electrode active material layer, and improving the safety of the battery. In addition, the first protective layer includes a conductive material, so that conductivity of the positive electrode plate can be taken into account and cycling performance of the battery can be improved.

2. In the present invention, the second protective layer including an inorganic material is arranged on a surface of the first protective layer, thereby further improving the safety of the battery.

3. The battery provided in the present invention includes the foregoing electrode assembly, which have has good safety and cycling performance.

### BRIEF DESCRIPTION OF THE DRAWINGS

To describe technical solutions in the embodiments of the present invention or in the prior art more clearly, the following briefly describes the drawings required for describing the embodiments or the prior art. Apparently, the drawings in the following description show some of the embodiments of the present invention, and persons of ordinary skill in the art may still derive other drawings from these drawings without creative efforts.
FIG. 1 is a schematic diagram of a structure of an electrode assembly in the prior art.
FIG. 2 is a schematic diagram of a structure of a positive electrode plate in the prior art.
FIG. 3 is a schematic diagram of a structure of an electrode assembly according to an embodiment of the present invention.
FIG. 4 is a schematic diagram of a structure of a positive electrode plate according to an embodiment of the present invention.
FIG. 5 is a top view of a second surface of a positive electrode current collector according to an embodiment of the present invention.
FIG. 6 is a schematic diagram of a structure of a positive electrode plate according to another embodiment of the present invention.
FIG. 7 is a schematic diagram of a structure of a positive electrode plate according to still another embodiment of the present invention.

Descriptions of reference numerals:
101: Positive electrode current collector;
a: First surface;
b: Second surface;
c: First region;
d: Second region;
102: Positive electrode active material layer;
103: First protective layer;
104: Second protective layer;
201: Negative electrode current collector;
202: Negative electrode active material layer;
300: Positive tab;
400: Negative tab.

### DETAILED DESCRIPTION OF THE EMBODIMENTS

To make objectives, technical solutions, and advantages of the present invention clearer, the following clearly and completely describes the technical solutions in the embodiments of the present invention with reference to the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

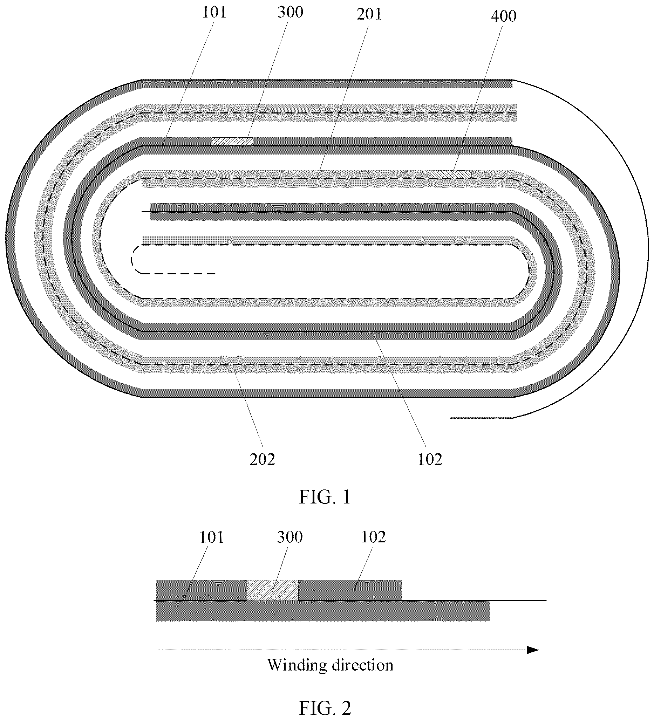

FIG. 1 is a schematic diagram of a structure of an electrode assembly in the prior art, and FIG. 2 is a schematic diagram of a structure of a positive electrode plate in the prior art. As shown in FIG. 1 and FIG. 2, the electrode assembly includes a positive electrode plate and a negative electrode plate that are formed through winding from the inside out, and a separator (not shown in the figures) is arranged between the positive electrode plate and the negative electrode plate to prevent a short circuit between the positive electrode plate and the negative electrode plate. However, when a battery is mechanically abused, the separator ruptures, which can easily lead to a short circuit between the positive electrode plate and the negative electrode plate, causing thermal runaway and causing potential safety hazards to use of the battery.

According to the winding mode of the electrode plate, in the present invention, the electrode plate is formed through winding from the inside out along a length direction of the electrode plate by taking the inside of the electrode assembly as a starting point of winding, and an ending position is an end point of winding. According to FIG. 1 and FIG. 2, it can be seen that there are a large quantity of uncoated foil regions on the surface of the positive electrode current collector 101 close to the end point of winding, and when the battery is mechanically abused, the positive electrode current collector 101 located in the outer ring of the electrode assembly may be easily short-circuited with the negative electrode active material layer 202, and it is most likely to cause thermal runaway, which is a safety hazard.

Based on the above analysis, the present invention provides a first protective layer on both surfaces of the positive electrode current collector, so that the first protective layer covers the surface of the positive electrode current collector and covers at least a part that is of the positive electrode current collector and that is located in the outermost ring of the electrode assembly, thereby significantly reducing the risk of a short circuit between the positive electrode current collector and the negative electrode active material layer, and improving the safety of the battery. In addition, the present invention selects a conductive material and a binder as the composition of the first protective layer. Therefore, on the basis of improving the safety of the battery, the conductivity of the positive electrode plate and the cycling performance of the battery are effectively taken into account.

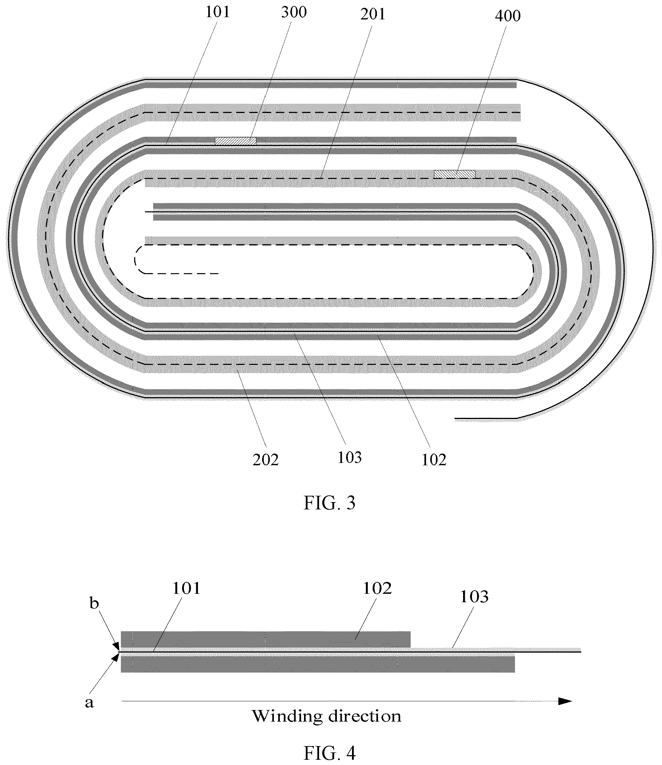

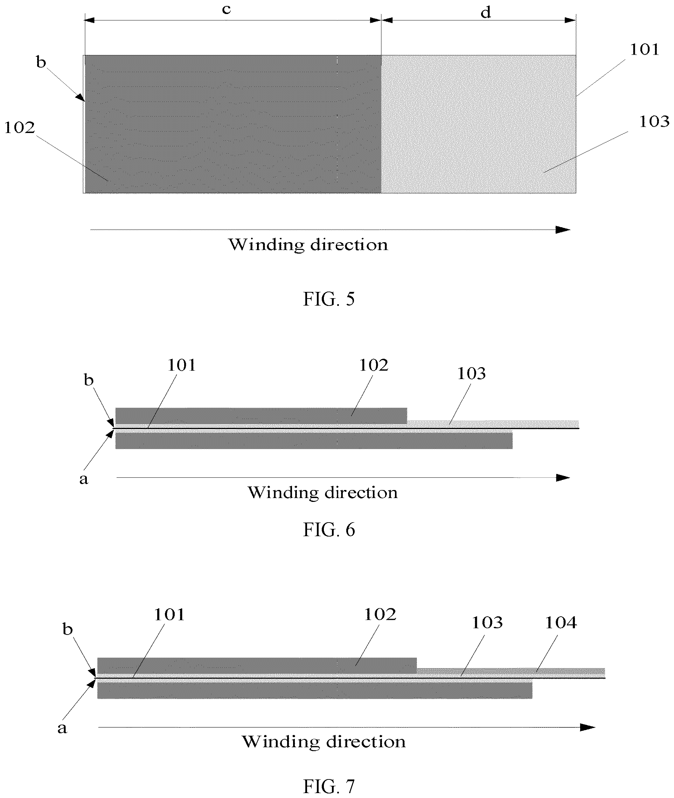

In a specific implementation, FIG. 3 is a schematic diagram of a structure of an electrode assembly according to an embodiment of the present invention, FIG. 4 is a schematic diagram of a structure of a positive electrode plate according to an embodiment of the present invention, and FIG. 5 is a top view of a second surface of a positive electrode current collector according to an embodiment of the present invention. As shown in FIG. 3 to FIG. 5, the electrode assembly includes a positive electrode plate formed through winding from the inside out, and the positive electrode plate includes a positive electrode current collector 101, a first protective layer 103, and a positive electrode active material layer 102. The positive electrode current collector 101 includes a first surface a and a second surface b that are parallel and opposite to each other. The first surface a is a surface close to a winding center, and the second surface b is a surface away from the winding center. The second surface b includes a first region c and a second region d. The first surface a and the first region c are provided with a first protective layer 103 and a positive electrode active material layer 102, and the first protective layer 103 is located between the positive electrode active material layer 102 and the positive electrode current collector 101. That is, the first protective layer 103 and the positive electrode active material layer 102 are sequentially laminated on the first surface a and the first region c on the second surface b of the positive electrode current collector 101, and the second region d is provided with the first protective layer 103.

Lengths of the first protective layer 103 and the positive electrode active material layer 102 that are arranged on the first surface a and the first region c can be determined based on the winding mode of the electrode assembly, and the lengths of the first protective layer 103 and the positive electrode active material layer 102 that are arranged on the first surface a are equal to the lengths of the first protective layer 103 and the positive electrode active material layer 102 that are arranged on the first region c. A focus of the present invention is that the second region d of the positive electrode active material layer 102 that is not covered by the second surface b is fully covered with the first protective layer, so that the first protective layer 103 arranged on the second surface b completely covers a part that is of the positive electrode current collector 101 and that is located in the outermost ring of the electrode assembly, specifically the second surface that is of the positive electrode current collector located in the outermost ring and that is away from the winding center, so as to reduce the risk of a short circuit between the positive electrode current collector and the negative electrode active material layer, and improve safety of the battery.

To take into account conductivity of the positive electrode plate, the first protective layer 103 includes a conductive material and a binder. The conductive material can play the role of filler, and when the battery is mechanically abused (for example, in case of nail penetration or extrusion by a foreign object), the conductive material can play a blocking role to prevent the short circuit between the burr generated by the positive electrode current collector and the negative electrode active material layer. In addition, the conductive material can play a conductive role, and the conductive material forms a good conductive network, so that the battery with the first protective layer can maintain stable conductivity in the process of charging and discharging, and improve the cycling performance of the battery. The binder plays a binding role, which can bind the conductive materials, bind the first protective layer and the positive electrode current collector, and bind the first protective layer and the positive electrode active material layer.

In a preferred embodiment, the first protective layer 103 includes a conductive material and a binder, excluding a non-conductive material (such as a ceramic particle). In this way, safety performance of the battery can be improved, and the conductivity of the positive electrode plate and the cycling performance of the battery can be taken into account. It may be understood that the first protective layer 103 may include a conventional functional additive in the art, for example, a leveling agent, a solvent, or a thickener, and content of the functional additive in the protective layer is less than 0.1 wt%. That is, the first protective layer 103 includes a conductive material, a binder, and a functional additive, and does not include a non-conductive material.

Therefore, the present invention provides an electrode assembly. The first protective layer is arranged on a surface of a positive electrode current collector and covers at least a part that is of the positive electrode current collector and that is located in the outermost ring of the electrode assembly, thereby reducing an uncoated foil region on the surface of the positive electrode current collector, reducing a risk of a short circuit between the positive electrode current collector and the negative electrode active material layer, and improving the safety of the battery. In addition, the first protective layer includes a conductive material, so that conductivity of the positive electrode plate can be taken into account and cycling performance of the battery can be improved.

It may be understood that with the increase in the thickness of the first protective layer 103, the positive electrode current collector 101 is better protected when the battery is mechanically abused. However, with the increase in the thickness of the first protective layer 103, the energy density of the battery is easily affected. Therefore, to take into account the safety and energy density of the battery, the thickness of the first protective layer 103 ranges from 1 µm to 10 µm, and for example, is 1 µm, 1.5 µm, 2 µm, 3 µm, 5 µm, 8 µm, or 10 µm, or is within a range defined by any two of the values. Further, the thickness of the first protective layer 103 is 2 µm to 5 µm.

FIG. 6 is a schematic diagram of a structure of a positive electrode plate according to another embodiment of the present invention. As shown in FIG. 6, to further improve an effect of a first protective layer 103 in protecting the electrode assembly, a thickness of the first protective layer 103 arranged on a first region c is less than or equal to a thickness of the first protective layer 103 arranged on a second region d.

Further, to take into account the energy density of the battery, a difference between the thickness of the first protective layer 103 arranged on the first region c and the thickness of the first protective layer 103 arranged on the second region d ranges from 0 µm to 10 µm, and for example, is 0 µm, 0.5 µm, 1 µm, 1.5 µm, 2 µm, 3 µm, 5 µm, 8 µm, or 10 µm, or is within a range defined by any two of the values.

To further improve the protective effect of the first protective layer 103 on a positive electrode current collector 101, a peeling force between the first protective layer 103 and the positive electrode current collector 101 should be greater than a peeling force between the first protective layer 103 and a positive electrode active material layer 102, and when the battery is mechanically abused, the first protective layer 103 is not likely to fall off from a surface of the positive electrode current collector 101, resulting in a failure. Specifically, content of the binder in the first protective layer 103 can be increased to ensure that the content of the binder is greater than content of the binder in the positive electrode active material layer 102, or adhesiveness of the binder in the first protective layer 103 can be improved to ensure that the adhesiveness of the binder is stronger than adhesiveness of the binder in the positive electrode active material layer 102.

To take into account conductivity of the positive electrode plate, a resistance of the first protective layer ranges from 0.01 Ω to 2 Ω (for example, is 0.01 Ω, 0.05 Ω, 0.1 Ω, 0.3 Ω, 0.5 Ω, 0.7 Ω, 1 Ω, 1.3 Ω, 1.5 Ω, 1.7 Ω, or 2 Ω), where the resistance refers to the resistance in a thickness direction of the first protective layer. The resistance can be obtained by using a volume resistance tester, where a probe diameter of a detector is 15 mm. In the test process, a volume resistance of the positive electrode current collector 101 is first tested and denoted as R1; and then a total volume resistance of the first protective layer and the electrode plate of the positive electrode current collector is tested and denoted as R2. The volume resistance in the thickness direction of the first protective layer is R = R2 - R1. Further, the resistance of the first protective layer ranges from 0.1 Ω to 1 Q, and for example, is 0.1 Ω, 0.2 Ω, 0.3 Ω, 0.35 Ω, 0.4 Ω, 0.5 Ω, 0.8 Ω, or 1 Q, or is within a range defined by any two of the values.

In a specific implementation, the conductive material includes a first conductive material and/or a second conductive material. The first conductive material includes one or more of SnO₂, In₂O₃, Sb-doped SnO₂ (ATO), F-doped SnO₂ (FTO), Sn-doped In₂O₃ (ITO), or Al-doped ZnO. The second conductive material includes a matrix particle and a coating layer coated on a surface of the matrix particle, where the matrix particle is one or more of aluminum oxide, magnesium oxide, titanium oxide, zinc oxide, silicon oxide, boehmite, cobalt oxide, iron phosphate, lithium iron phosphate, lithium nickel cobalt manganese oxide, or lithium iron manganese phosphate, and the coating layer includes one or more of carbon, SnO₂, In₂O₃, Sb-doped SnO₂, F-doped SnO₂, Sn-doped In₂O₃, or Al-doped ZnO. The doping and coating methods can be conventional technical means in the art. A mass of the coating layer accounts for 5% to 40% of a total mass of the second conductive material (for example, 5%, 10%, 15%, 20%, 25%, 30%, 35%, or 40%). Otherwise, if content of the coating layer is too low, a conductive effect of the conductive material is easily affected, and then the cycling performance of the battery is affected.

Further, the conductive material is preferably the second conductive material. Furthermore, the matrix particle is one or more of aluminum oxide, magnesium oxide, titanium oxide, zinc oxide, silicon oxide, boehmite, cobalt oxide, or iron phosphate, and the coating layer is Sb-doped SnO₂, where a mass of the coating layer accounts for 5% to 40% (for example, 5%, 10%, 15%, 20%, 25%, 30%, 35%, or 40%) of a total mass of the second conductive material.

Further, Dv50 of the conductive material ranges from 0.05 µm to 5 µm, and for example, is 0.05 µm, 0.10 µm, 0.15 µm, 0.20 µm, 0.50 µm, 1.0 µm, 2.0 µm, or 5.0 µm, or is within a range defined by any two of the values. Furthermore, Dv50 of the conductive material ranges from 0.1 µm to 1 µm. Dv50 is a particle size corresponding to 50% of the volume distribution of the conductive material, which can be detected by using a particle size analyzer. The particle size of the conductive material can be limited, so that the conductive material can be better attached to the positive electrode current collector, an effect of the protective layer in protecting the positive electrode current collector can be improved, and a thickness limit of the protective layer and the processing difficulty of the electrode plate can be taken into account.

Further, a resistivity of the conductive material ranges from 0.01 Ω•m to 1 Ω•m, and for example, is 0.01 Ω•m, 0.02 Ω•m, 0.05 Ω•m, 0.10 Ω•m, 0.20 Ω•m, 0.25 Ω•m, 0.50 Ω•m, 1Ω•m, or is within a range defined by any two of the values. A conductive material with an appropriate resistivity can be selected to ensure a resistance of the protective layer and improve conductivity of the positive electrode plate.

Further, a mass of the conductive material accounts for 40% to 98% (for example, 40%, 50%, 60%, 70%, 80%, 90%, 98%) of the total mass of the first protective layer 103. If the content of the conductive material is too low, the conductive material cannot protect the positive electrode current collector, and the conductivity of the positive electrode plate is affected.

The binder can be a conventional binder in the art, specifically including polyvinylidene fluoride, acrylic modified polyvinylidene fluoride, polyacrylate, polyimide, styrene-butadiene rubber, or styrene acrylic rubber. A mass of the binder accounts for 2% to 60% (for example, 2%, 5%, 10%, 20%, 30%, 40%, 50%, or 60%) of a total mass of the protective layer.

FIG. 7 is a schematic diagram of a structure of a positive electrode plate according to another embodiment of the present invention. As shown in FIG. 7, the positive electrode plate further includes a second protective layer 104. The second protective layer 104 is arranged on a surface of a first protective layer 103 located in a second region d. That is, the first protective layer 103 and the second protective layer 104 are sequentially laminated on the second region d. The second protective layer 104 includes an inorganic material and the binder. In this case, a thickness of the first protective layer 103 arranged on a first region c and a thickness of the first protective layer 103 arranged on the second region d can be equal.

The second protective layer includes an inorganic material and the binder, and a resistivity of the inorganic material is greater than 10⁴ Ω•cm. For example, the inorganic material is one or more of aluminum oxide, boehmite, silicon oxide, titanium oxide, calcium carbonate, barium sulfate, or barium carbonate, and a mass of the inorganic material accounts for 60% to 95% (for example, 60%, 70%, 80%, 90%, or 95%) of a total mass of the second protective layer. The binder can be the same as that in the first protective layer 103.

The positive electrode active material layer 102 includes a positive electrode active material, a conductive agent, and the binder. Taking a lithium-ion battery as an example, the positive electrode active material is one or more of lithium cobalt oxide, lithium nickel-cobalt-manganese oxide, lithium nickel-cobalt aluminate, lithium iron phosphate, or lithium manganese oxide. The conductive agent includes one or more of conductive carbon black, carbon nanotubes, conductive graphite, or graphene. The binder includes one or more of polyvinylidene fluoride (PVDF), acrylic modified PVDF, polyacrylate polymers, polyimide, styrene-butadiene rubber, or styrene acrylic rubber.

The positive electrode plate also includes a positive tab 300, which is used as a conductor for the positive electrode plate to be connected with an external circuit. The positive tab 300 can be provided according to conventional technical means in the art, and details are not described in the present invention.

A method for preparing the positive electrode plate provided in the present invention includes the following steps. Firstly, slurry of the first protective layer and slurry of the positive electrode active material layer are prepared. Specifically, a method for preparing the slurry of the first protective layer includes: A conductive material and a binder are mixed and dispersed in a solvent according to a certain proportion, and the slurry of the first protective layer is prepared after adjusting solid content. A method for preparing the slurry of the positive electrode active material layer includes: The positive electrode active material, a conductive agent, and a binder are mixed and dispersed in the solvent according to a certain proportion, and the slurry of the positive electrode active material layer is prepared after adjusting solid content. Secondly, the slurry of the first protective layer is coated on a first surface and a second surface of the positive electrode current collector to obtain the first protective layer, and then the prepared slurry of the positive electrode active material layer is coated on a surface of the protective layer away from the positive electrode current collector to obtain the positive electrode active material layer. Finally, the positive electrode plate is obtained after welding the tab on the surface of the positive electrode current collector.

When a thickness of the first protective layer located in the second region is greater than a thickness of the first protective layer located in the first region, after the positive electrode active material layer is prepared, a layer of the slurry of the first protective layer can be coated on the surface of the first protective layer that is not coated with the slurry of the positive electrode active material layer, so that the thickness of the first protective layer in the second region is greater than the thickness of the first protective layer located in the first region. Alternatively, this can be achieved through gravure coating, where the quantity of gravure rolls in the second region is smaller than the quantity of gravure rolls in the first region.

When the positive electrode plate includes a second protective layer, slurry of the second protective layer needs to be prepared, and the slurry of the second protective layer needs to be coated on the surface of the first protective layer that is not coated with the slurry of the positive electrode active material layer, to obtain the second protective layer.

The electrode assembly further includes a negative electrode plate that is formed through winding from the inside out and a separator, where the separator is located between the positive electrode plate and the negative electrode plate. The negative electrode plate includes a negative electrode current collector 201, a negative electrode active material layer 202 and a negative tab 400. The negative electrode plate and the separator are conventional materials in the art, and persons skilled in the art can select an appropriate material according to actual needs, and obtain the electrode assembly through the winding process.

In summary, the present invention provides an electrode assembly. The first protective layer is arranged on a surface of a positive electrode current collector and covers at least a part that is of the positive electrode current collector and that is located in the outermost ring of the electrode assembly, thereby reducing an uncoated foil region on the surface of the positive electrode current collector, reducing a risk of a short circuit between the positive electrode current collector and the negative electrode active material layer, and improving the safety of the battery. In addition, the first protective layer includes a conductive material, so that conductivity of the positive electrode plate can be taken into account and cycling performance of the battery can be improved.

A second aspect of the present invention provides a battery, where the battery includes any one of the foregoing electrode assemblies.

The electrode assembly provided in the first aspect of the present invention is sealed in a battery housing and injected with an electrolyte, and the battery can be obtained after conventional processes such as formation. The battery provided in the present invention includes the foregoing electrode assembly, and therefore has good safety performance and cycling performance.

The following provides detailed descriptions with reference to specific examples.

### Example 1

The electrode assembly provided in this example has a structure as shown in FIG. 3, including a positive electrode plate and a negative electrode plate that are formed through winding from the inside out. The positive electrode plate has a structure as shown in FIG. 4, including an aluminum foil of a positive electrode current collector, a first protective layer, and a positive electrode active material layer.

The first protective layer includes 95 parts by mass of a second conductive material and 5 parts by mass of polyvinylidene fluoride PVDF. The second conductive material includes a matrix particle TiO₂. The coating layer includes Sb-doped SnO₂. A ratio of a mass of the matrix particle to a mass of the coating layer is 9: 1, and a resistivity of the conductive material is 0.20 Ω•m.

The positive electrode active material layer includes 96 parts by mass of lithium cobalt oxide, 1 part by mass of carbon black, 1 part by mass of carbon nanotubes, and 2 parts by mass of polyvinylidene fluoride PVDF.

The negative electrode plate includes a copper foil of a negative electrode current collector and a negative electrode active material layer arranged on a surface of the copper foil of the negative electrode current collector. The negative electrode active material layer includes 96 parts by mass of artificial graphite, 1 part by mass of carbon black, 1.5 parts by mass of styrene-butadiene rubber, and 1.5 parts by mass of sodium carboxymethyl cellulose.

A thickness of the first protective layer located on the first surface/the second surface of the aluminum foil of the positive electrode current collector is 3 µm.

A method for preparing the electrode assembly provided in this example includes the following steps:

Step 1: A second conductive material and polyvinylidene fluoride PVDF were mixed and dispersed in a solvent NMP according to the foregoing mass fraction, and solid content was adjusted to 40%, to prepare slurry of a first protective layer.

Step 2: Lithium cobalt oxide, carbon black, carbon nanotubes, and PVDF were mixed and dispersed in the solvent NMP according to the foregoing mass fraction, and solid content was adjusted to 70%, to prepare slurry of the positive electrode active material layer.

Step 3: The slurry of the first protective layer prepared in step 1 was coated on the first surface and the second surface of the aluminum foil of the positive electrode current collector to obtain a protective layer; and the slurry of the positive electrode active material layer prepared in step 2 was coated on the surface of the protective layer away from the positive electrode current collector, and the positive electrode plate was obtained after drying.

Step 4: Artificial graphite, carbon black, styrene-butadiene rubber, and sodium carboxymethyl cellulose were mixed and dispersed in a solvent, that is, deionized water, according to the foregoing mass fraction, and the solid content was adjusted to 40% to prepare slurry of the negative electrode active material layer; and the prepared slurry of the negative electrode active material layer was coated on the surface of copper foil of the negative electrode current collector, and the negative electrode plate was obtained after drying.

Step 5: A roller press was used to roll the positive electrode plate and the negative electrode plate to a designed thickness, a slitting machine was used to roll the positive electrode plate and the negative electrode plate to a designed width, and then a positive tab and a negative tab were welded onto the positive electrode plate and the negative electrode plate respectively.

Step 6: A separator was placed between the positive electrode plate and the negative electrode plate; then winding was performed according to the method shown in FIG. 3 to obtain the electrode assembly; and then the electrode assembly was fastened with glue.

### Example 2

For an electrode assembly provided in this example, refer to Example 1. Differences lie in that a structure of a positive electrode plate is shown in FIG. 6, a thickness of a first protective layer located in a first region on a second surface of a positive electrode current collector is 2 µm, and a thickness of a protective layer in a second region is 5 µm. For details, refer to Table 1.

### Example 3

For an electrode assembly provided in this example, refer to Example 2. A difference lies in that a thickness of a protective layer in a second region is 8 µm. For details, refer to Table 1.

### Example 4

For an electrode assembly provided in this example, refer to Example 2. A difference lies in that a thickness of a protective layer in a second region is 10 µm. For details, refer to Table 1.

### Example 5

For an electrode assembly provided in this example, refer to Example 2. Differences lie in that a structure of a positive electrode plate is shown in FIG. 7, a thickness of a first protective layer is 2 µm, a thickness of a second protective layer is 3 µm, which means that a total thickness of the protective layer arranged on the second region on a second surface of a positive electrode current collector is 5 µm; and a second protective layer includes 95 parts by mass of aluminum oxide and 5 parts by mass of PVDF. For details, refer to Table 1.

### Example 6

For an electrode assembly provided in this example, refer to Example 2. Differences lie in that a structure of a positive electrode plate is shown in FIG. 7, a thickness of a first protective layer is 2 µm, and a thickness of a second protective layer is 6 µm, which means that a total thickness of the protective layer arranged on a second region on a second surface of a positive electrode current collector is 8 µm. For details, refer to Table 1.

### Example 7

For an electrode assembly provided in this example, refer to Example 2. Differences lie in that a structure of a positive electrode plate is shown in FIG. 7, a thickness of a first protective layer is 2 µm, and a thickness of a second protective layer is 8 µm, which means that a total thickness of the protective layer arranged on a second region on a second surface of a positive electrode current collector is 10 µm. For details, refer to Table 1.

### Example 8

For an electrode assembly provided in this example, refer to Example 1. A difference lies in that a first protective layer includes a first conductive material, that is, SnO₂. For details, refer to Table 1.

### Example group 9

For an electrode assembly provided in this example group, refer to Example 1. A difference lies in that a ratio of a mass of a coating layer to a mass of a second conductive material is changed. Details are shown below.

### Example 9a

For an electrode assembly provided in this example group, refer to Example 1. A difference lies in that a ratio of a mass of a coating layer to a total mass of a second conductive material is 5%, where a resistivity of the conductive material is 0.28 Ω•m.

### Example 9b

For an electrode assembly provided in this example group, refer to Example 1. A difference lies in that a ratio of a mass of a coating layer to a total mass of a second conductive material is 20%, where a resistivity of the conductive material is 0.13 Ω•m.

### Example 9c

For an electrode assembly provided in this example group, refer to Example 1. A difference lies in that a ratio of a mass of a coating layer to a total mass of a second conductive material is 30%, where a resistivity of the conductive material is 0.06 Ω•m.

### Example 9d

For an electrode assembly provided in this example group, refer to Example 1. A difference lies in that a ratio of a mass of a coating layer to a total mass of a second conductive material is 40%, where a resistivity of the conductive material is 0.02 Ω•m.

For details, refer to Table 1.

### Example group 10

For an electrode assembly provided in this example group, refer to Example 1. A difference lies in that a type of a matrix particle or a type of a coating layer is changed. Details are shown below.

### Example 10a

For an electrode assembly provided in this example group, refer to Example 1. A difference lies in that a matrix particle is lithium iron phosphate.

### Example 10b

For an electrode assembly provided in this example group, refer to Example 1. A difference lies in that a coating layer is carbon.

For details, refer to Table 1.

### Example 11

For an electrode assembly provided in this comparative example, refer to Example 2. A difference lies in that a thickness of a protective layer in a second region is 1 µm. For details, refer to Table 1.

### Example 12

For an electrode assembly provided in this comparative example, refer to Example 2. A difference lies in that a thickness of a protective layer in a second region is 2 µm. For details, refer to Table 1.

### Example 13

For an electrode assembly provided in this comparative example, refer to Example 1. A difference lies in that a conductive material includes TiO₂ and Sb-doped SnO₂ that are mixed, and a ratio of a mass of TiO₂ to a mass of Sb-doped SnO₂ is 9: 1. For details, refer to Table 1.

### Comparative Example 1

For an electrode assembly provided in this comparative example, refer to Example 1. A difference lies in that the first protective layer is not arranged on a second region on a second surface of a positive electrode current collector. For details, refer to Table 1.

### Comparative Example 2

An electrode assembly provided in this comparative example is shown in FIG. 1. That is, a positive electrode plate includes a positive electrode current collector and a positive electrode active material layer arranged on a surface of the positive electrode current collector, excluding a first protective layer and a second protective layer. For details, refer to Table 1.

**Table 1**

| | Components of a protective Layer | | | Thickness (µm) of a first protective layer located in a second region | Thickness (µm) of the first protective layer located in a first region | Thickness (µm) of a second protective layer | Resistivity (Ω) of the protective layer located in the second region |
|---|---|---|---|---|---|---|---|
| | Type of a conductive material | | Dv50 (µm) of the conductive material | | | | |
| Example 1 | Second conductive material | TiO₂ matrix particles: 90% | 0.4 | 3 | 3 | / | 0.20 |
| | | Sb-doped SnO₂ at the coating layer: 10% | | | | | |
| Example 2 | Second conductive material | TiO₂ matrix particles: 90% | 0.4 | 5 | 2 | / | 0.35 |
| | | Sb-doped SnO₂ at the coating layer: 10% | | | | | |
| Example 3 | Second conductive material | TiO₂ matrix particles: 90% | 0.4 | 8 | 2 | / | 0.55 |
| | | Sb-doped SnO₂ at the coating layer: 10% | | | | | |
| Example 4 | Second conductive material | TiO₂ matrix particles: 90% | 0.4 | 10 | 2 | / | 0.70 |
| | | Sb-doped SnO₂ at the coating layer: 10% | | | | | |
| Example 5 | Second conductive material | TiO₂ matrix particles: 90% | 0.4 | 2 | 2 | 3 | >10 |
| | | Sb-doped SnO₂ at the coating layer: 10% | | | | | |
| Example 6 | Second conductive material | TiO₂ matrix particles: 90% | 0.4 | 2 | 2 | 6 | >10 |
| | | Sb-doped SnO₂ at the coating layer: 10% | | | | | |
| Example 7 | Second conductive material | TiO₂ matrix particles: 90% | 0.4 | 2 | 2 | 8 | >10 |
| | | Sb-doped SnO₂ at the coating layer: 10% | | | | | |
| Example 8 | First conductive material | SnO₂ | 0.05 | 3 | 3 | / | 2 |
| Example 9a | Second conductive material | TiO₂ matrix particles: 95% | 0.4 | 3 | 3 | / | 0.28 |
| | | Sb-doped SnO₂ at the coating layer: 5% | | | | | |
| Example 9b | Second conductive material | TiO₂ matrix particles: 80% | 0.4 | 3 | 3 | / | 0.15 |
| | | Sb-doped SnO₂ at the coating layer: 20% | | | | | |
| Example 9c | Second conductive material | TiO₂ matrix particles: 70% | 0.4 | 3 | 3 | / | 0.08 |
| | | Sb-doped SnO₂ at the coating layer: 30% | | | | | |
| Example 9d | Second conductive material | TiO₂ matrix particles: 60% | 0.4 | 3 | 3 | / | 0.03 |
| | | Sb-doped SnO₂ at the coating layer: 40% | | | | | |
| Example 10a | Second conductive material | Lithium iron phosphate matrix particles: 90% | 0.4 | 3 | 3 | / | 0.18 |
| | | Sb-doped SnO₂ at the coating layer: 10% | | | | | |
| Example 10b | Second conductive material | TiO₂ matrix particles: 90% | 0.4 | 3 | 3 | / | 0.14 |
| | | Carbon at the coating layer: 10% | | | | | |
| Example 11 | Second conductive material | TiO₂ matrix particles: 90% | 0.4 | 1 | 3 | / | 0.07 |
| | | Sb-doped SnO₂ at the coating layer: 10% | | | | | |
| Example 12 | Second conductive material | TiO₂ matrix particles: 90% | 0.4 | 2 | 3 | / | 0.13 |
| | | Sb-doped SnO₂ at the coating layer: 10% | | | | | |
| Example 13 | Mixed: TiO₂ (90%) and Sb-doped SnO₂ (10%) | | 0.4 | 3 | 3 | / | 0.50 |
| Comparative Example 1 | Second conductive material | TiO₂ matrix particles: 90% | 0.4 | 0 | 3 | / | / |
| | | Sb-doped SnO₂ at the coating layer: 10% | | | | | |
| Comparative Example 2 | / | | | | | | |

The electrode assembly provided in any one of Examples 1 to 13 and Comparative Examples 1 and 2 was packaged with an aluminum-plastic film, and then baked until the moisture met the requirement; an electrolyte was injected to obtain a lithium-ion battery; and then a safety test was carried out on the battery. The test method is as follows, and the test results are shown in Table 2.

Nail penetration test: Prepare 30 identical lithium-ion batteries; fully charge each lithium-ion battery, and put the lithium-ion battery on a test bench of a nail penetration tester; and penetrate the middle of the lithium-ion battery with a tungsten steel nail with a diameter of 3 mm and a nail tip length of 3.62 mm at a speed of 100 mm/s. If the lithium-ion battery does not catch fire or explode, the battery passes the test. If the battery catches fire or explodes, the battery does not pass the test. The result is expressed as "passed quantity/tested quantity". For example, if the tested quantity is 30, and the passed quantity is 28, the result is denoted as "28/30".

Foreign object extrusion test: Prepare 30 identical lithium-ion batteries; fully charge each lithium-ion battery, and put the lithium-ion battery on a test bench of a foreign object extrusion tester; place M2*4 screws (with a screw diameter of 2 mm and a screw length of 4 mm) in the middle of the battery, and then start the foreign object extrusion tester; and then press down an extrusion plate at a speed of 100 mm/s, and when the extrusion force reaches 13 KN, stop the test. If the lithium-ion battery does not catch fire or explode, the battery passes the test. If the battery catches fire or explodes, the battery does not pass the test. The result is expressed as "passed quantity/tested quantity". For example, if the tested quantity is 30, and the passed quantity is 28, the result is denoted as "28/30".

45°C cycling test: At 45°C, charge the lithium-ion battery at 1.5C and discharge the battery at 0.5C, and then record the discharge capacity Q2 of the 500^{th} charge and discharge and the discharge capacity Q1 of the first charge and discharge. The capacity retention rate is equal to Q2/Q1×100%.

**Table 2**

| | Nail penetration test pass rate (passed quantity/tested quantity) | Screw extrusion test pass rate (passed quantity/tested quantity) | Cycling capacity retention rate at 45°c (%) |
|---|---|---|---|
| Example 1 | 26/30 | 26/30 | 89.20% |
| Example 2 | 27/30 | 26/30 | 89.10% |
| Example 3 | 28/30 | 28/30 | 89.30% |
| Example 4 | 29/30 | 30/30 | 89.40% |
| Example 5 | 29/30 | 30/30 | 89.20% |
| Example 6 | 30/30 | 30/30 | 89.10% |
| Example 7 | 30/30 | 30/30 | 89.30% |
| Example 8 | 30/30 | 30/30 | 88.90% |
| Example 9a | 29/30 | 30/30 | 89.10% |
| Example 9b | 26/30 | 26/30 | 89.20% |
| Example 9c | 24/30 | 24/30 | 89.30% |
| Example 9d | 22/30 | 23/30 | 89.30% |
| Example 10a | 27/30 | 26/30 | 89.20% |
| Example 10b | 26/30 | 25/30 | 89.20% |
| Example 11 | 21/30 | 18/30 | 89.40% |
| Example 12 | 24/30 | 26/30 | 89.30% |
| Example 13 | 30/30 | 30/30 | 56.50% |
| Comparative Example 1 | 16/30 | 14/30 | 89.30% |
| Comparative Example 5 | 0/30 | 0/30 | 89.20% |

Finally, it should be noted that the foregoing embodiments are merely intended for describing the technical solutions of the present invention, instead of limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An electrode assembly, **characterized in that** the electrode assembly comprises a positive electrode plate formed through winding, and the positive electrode plate comprises a positive electrode current collector, a first protective layer, and a positive electrode active material layer, wherein
the positive electrode current collector comprises a first surface close to a winding center and a second surface away from the winding center, the second surface comprises a first region and a second region, the first surface and the first region are provided with the first protective layer and the positive electrode active material layer, the first protective layer is located between the positive electrode active material layer and the positive electrode current collector, and the second region is provided with the first protective layer; and
the first protective layer comprises a conductive material and a binder.

2. The electrode assembly according to claim 1, **characterized in that** the first protective layer comprises a conductive material, a binder, and a functional additive.

3. The electrode assembly according to claim 1 or 2, **characterized in that** the positive electrode plate further comprises a second protective layer, the first protective layer and the second protective layer are sequentially laminated on the second region, and the second protective layer comprises an inorganic material and a binder.

4. The electrode assembly according to any one of claims 1 to 3, **characterized in that** a thickness of the first protective layer ranges from 1 µm to 10 µm; and/or
a thickness of the first protective layer provided in the first region is less than or equal to a thickness of the first protective layer provided in the second region.

5. The electrode assembly according to claim 1, **characterized in that** a difference between the thickness of the first protective layer provided in the first region and the thickness of the first protective layer provided in the second region ranges from 0 µm to 10 µm.

6. The electrode assembly according to any one of claims 1 to 5, **characterized in that** a peeling force between the first protective layer and the positive electrode current collector is greater than a peeling force between the first protective layer and the positive electrode active material layer.

7. The electrode assembly according to any one of claims 1 to 6, **characterized in that** a resistance of the first protective layer ranges from 0.01 Ω to 2 Ω and preferably, ranges from 0.1 Ω to 1 Ω.

8. The electrode assembly according to any one of claims 1 to 7, **characterized in that** the conductive material comprises a first conductive material and/or a second conductive material; the first conductive material comprises one or more of SnO₂, In₂O₃, Sb-doped SnO₂, F-doped SnO₂, Sn-doped In₂O₃, or Al-doped ZnO; and the second conductive material comprises a matrix particle and a coating layer coated on a surface of the matrix particle, wherein the matrix particle is one or more of aluminum oxide, magnesium oxide, titanium oxide, zinc oxide, silicon oxide, boehmite, cobalt oxide, iron phosphate, lithium iron phosphate, lithium nickel cobalt manganese oxide, or lithium iron manganese phosphate, and the coating layer comprises one or more of carbon, SnO₂, In₂O₃, Sb-doped SnO₂, F-doped SnO₂, Sn-doped In₂O₃, or Al-doped ZnO; and/or
a mass of the coating layer accounts for 5% to 40% of a total mass of the second conductive material.

9. The electrode assembly according to any one of claims 1 to 8, **characterized in that** the conductive material comprises the second conductive material, wherein the matrix particle is one or more of aluminum oxide, magnesium oxide, titanium oxide, zinc oxide, silicon oxide, boehmite, cobalt oxide, and iron phosphate, and the coating layer is Sb-doped SnO₂.

10. The electrode assembly according to any one of claims 1 to 9, **characterized in that** Dv50 of the conductive material ranges from 0.05 µm to 5 µm and preferably, ranges from 0.1 µm to 1 µm.

11. The electrode assembly according to any one of claims 1 to 10, **characterized in that** a resistivity of the conductive material ranges from 0.01 Ω•m to 1 Ω•m.

12. The electrode assembly according to any one of claims 1 to 11, **characterized in that** a mass of the conductive material accounts for 40% to 98% of a total mass of the first protective layer.

13. The electrode assembly according to any one of claims 3 to 12, **characterized in that** a resistivity of the inorganic material is greater than 10⁴ Ω•cm; and/or
the inorganic material is one or more of aluminum oxide, boehmite, silicon oxide, titanium oxide, calcium carbonate, barium sulfate, or barium carbonate.

14. The electrode assembly according to any one of claims 3 to 13, **characterized in that** a mass of the inorganic material accounts for 60% to 95% of a total mass of the second protective layer.

15. A battery, **characterized in that** the battery comprises the electrode assembly according to any one of claims 1 to 14.
